# EUROPEAN PATENT SPECIFICATION

(11) **EP 1 981 233 B1**
(45) Date of publication and mention of the grant of the patent: **06.07.2011**
(21) Application number: 08153256.6
(22) Date of filing: 25.03.2008
(51) Int. Cl.: H04L 12/58

(54) **Method and system for processing a message**
Verfahren und System zur Verarbeitung einer Nachricht
Procédé et système de traitement d'un message

(30) Priority: 11.04.2007 GB 0707023; 24.01.2008 US 19415
(43) Date of publication of application: 15.10.2008
(73) Proprietor: Cvon Innovations Ltd, London W1F 7BY (GB)
(72) Inventor: Aaltonen, Janne, 20900, Turku (FI); Antikainen, Ismo, 02430, Masala (FI)
(74) Representative: Barton, Russell Glen

(56) References cited:
- EP-A- 1 408 705
- EP-A- 1 677 475
- WO-A-03/049461
- US-A1- 2004 054 576

## Description

### Field of the Invention

The present invention relates generally to mobile communication networks and particularly to a method and system for processing a message.

### Background of the Invention

Sending messages in mobile communication networks is a widely used and popular service. For example, mainstream messaging types in the GSM (Global System for Mobile Communications) network are SMS (Short Message Service) and MMS (Multimedia Messaging Service) messages. Messages are typically sent and received with mobile terminals such as a mobile phone or a PDA (Personal Digital Assistant). Mobile communication networks can also be used to send and receive other type of messages, including electronic mail messages, voice messages, video messages, picture messages and text messages. When a mobile terminal user sends a message to another mobile terminal user within a mobile network of the same network operator, the message is typically first delivered via a base station to a store-and-forward center of the mobile network. The store-and-forward center forwards the destination address of the message to a subscriber location database which then returns routing instructions of the message to the store-and-forward center. The message is then delivered according to the routing instructions to the recipient via a specific base station.

If the recipient is beyond the reach of the mobile network, the store-and-forward center stores the message. The store-and-forward center has a time limit for how long it will store the message and thus it is suitable for short-term storing only. Subscribers can usually specify a shorter time limit if they want. The subscriber location database informs the store-and-forward center when the recipient is reachable and then the store-and-forward center delivers the message to the recipient.

The situation is more complex when a sender and a recipient of a message are subscribers of mobile networks of different network operators. In this case a store-and-forward center of the transmitting mobile network forwards the destination address of the message to a subscriber location database of the receiving mobile network. The database returns routing instructions and then the message is delivered according to the routing instructions from the transmitting mobile network to the recipient through a specific base station of the receiving mobile network. Typically the network operator of the transmitting mobile network has to pay a so-called termination fee to the network operator of the receiving mobile network. Examples of prior art message processing systems can be found in EP 1408705 A, WO 03/049461 A and US 2004/054576 A1.

### Summary

In accordance with aspects of the present invention, there is provided a method and system according to the appended claims.

Embodiments of the invention are particularly convenient for use in enabling to route a message in a versatile way from a mobile terminal user of one mobile network to another mobile terminal user of another mobile network.

In accordance with further aspects of the invention, there is provided a method and system enabling to archive a message in a mobile network, which message has been sent from another mobile network.

Further features and advantages of the invention will become apparent from the following description of preferred embodiments of the aspects of the invention, given by way of example only, which is made with reference to the accompanying drawings.

### Brief description of the Drawings

FIG. 1 shows a block diagram of a prior art communication system comprising mobile networks of different network operators,
FIG. 2 shows a block diagram of a communication system according to an embodiment of the invention comprising mobile networks of different network operators, and
FIG. 3 shows a block diagram of a communication system according to an embodiment of the invention comprising mobile networks of different network operators.

### Detailed Description of the Invention

In the following description of the various embodiments, reference is made to the accompanying drawings which form a part hereof, and in which is shown by way of illustration some of the embodiments in which the invention may be practiced. The exemplary embodiments presented in this text and their advantages relate by applicable parts to the method as well as the system according to the invention, even though this is not always separately mentioned.

The present invention relates to processing a message being delivered from one mobile network to another. The invention is applicable to various network technologies, such as second-generation (2G) and "second and a half'-generation (2.5G) mobile networks based on time division multiple access (TDMA) technology, and third-generation (3G) networks based on code division multiple access (CDMA) and wideband code division multiple access (WCDMA) technologies. Some examples of suitable mobile networks are GSM (Global System for Mobile Communications), GPRS (General Packet Radio Service), EDGE (Enhanced Data rates for GSM Evolution) and UMTS (Universal Mobile Telecommunication System).

Some embodiments of the present invention enable modifying a message which has been received from a mobile terminal user of a mobile network and which message will be delivered to another mobile terminal user of another mobile network. Some embodiments of the present invention also enable storing a message in an archive, which can be accessed via an application program interface (API), and from which the message can be conveyed to a web service or a mobile terminal user.

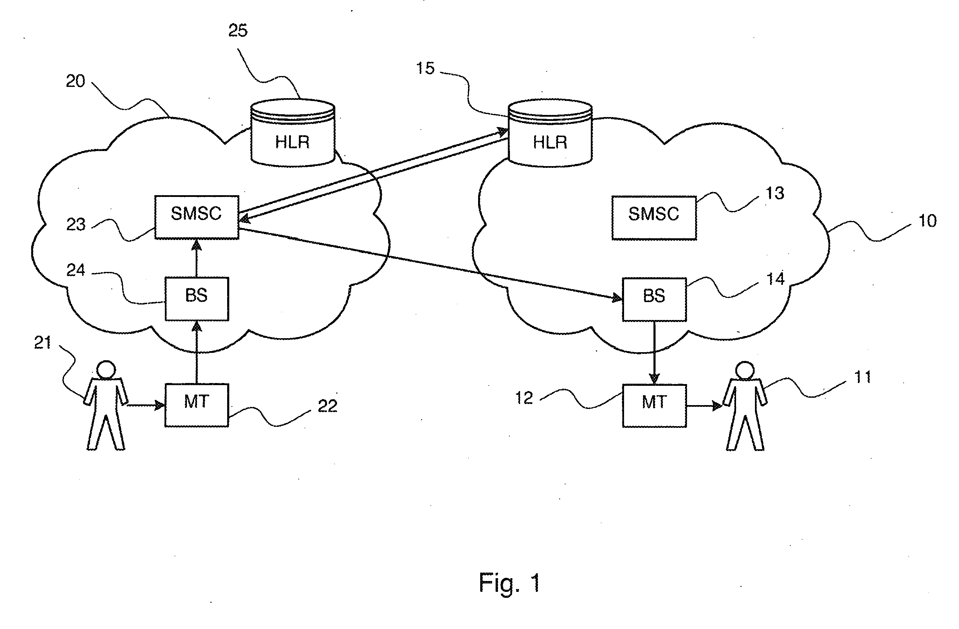

FIG. 1 shows a block diagram of a prior art communication system comprising mobile networks of two network operators. In this exemplary illustration an SMS message is delivered from a subscriber of a mobile network to another subscriber of another mobile network. A subscriber 21 of a transmitting mobile network 20 sends the message by using a mobile terminal (MT) 22, such as a mobile phone. The message is first delivered to a short message service center (SMSC) 23 of the transmitting mobile network 20 via a base station (BS) 24. Then the SMSC 23 forwards the destination address of the message to a home location register (HLR) 15 of the receiving mobile network 10. The HLR 15 maintains location information and service profiles of the subscribers 11 of the receiving mobile network 10. The HLR 15 returns routing instructions to the SMSC 23 and then, according to the instructions, the message is delivered from the SMSC 23 of the transmitting mobile network 20 to a mobile terminal 12 of a recipient 11 via a base station 14 of the receiving mobile network 10.

When delivering the message, from the subscriber 21 to the subscriber 11, in the prior art communication system shown in FIG. 1, a HLR 25 of the transmitting mobile network 20 is not utilized. Respectively, an SMSC 13 of the receiving mobile network 10 is not used either, and in consequence of this the message cannot be stored, not even temporarily, in the receiving mobile network 10.

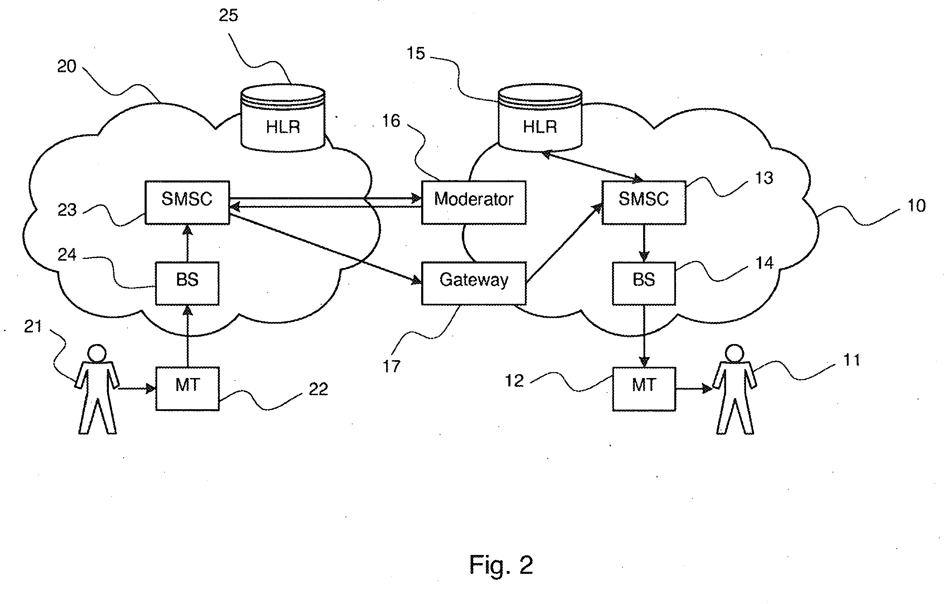

FIG. 2 shows a block diagram of a communication system according to an embodiment of the invention. Instead of requesting routing instructions of the message from the HLR 15, the request is delivered to a moderator server 16 of the receiving mobile network 10. The moderator server 16 imitates operation of the HLR 15 to the SMSC 23 of the transmitting mobile network 20. The routing instructions of the message are generated at the moderator server 16. The routing instructions advise the SMSC 23 of the transmitting mobile network 20 to deliver the message to a gateway server 17 of the receiving mobile network 10. The gateway server 17 transmits the message to the SMSC 13, which then, by utilizing the information of the HLR 15, forwards the message to the mobile terminal 12 of the recipient 11 via the base station 14. By routing the message through the SMSC 13, instead of delivering the message directly to the base station 14, the message can be temporarily stored in the receiving mobile network 10.

By a server is meant a unit that provides some service to a system. A server can be implemented in hardware, software, or a combination of hardware and software. The moderator server 16 and gateway server 17 can be different units or one and the same unit.

The SMSC 13 and SMSC 23 represent examples of a store-and-forward center, which store-and-forward center is responsible for relaying, storing and forwarding a message. Typically, the store-and-forward center is an SMSC (Short Message Service Center) as shown in FIG. 2 or MMSC (Multimedia Messaging Service Center) designed to process SMS (Short Message Service) messages or MMS (Multimedia Messaging Service) messages, respectively. The request to send routing instructions typically comprises information of the recipient of the message. The information can include e.g. the destination address of the message, such as an MSISDN (Mobile Subscriber Integrated Services Digital Network).

In this exemplary illustration shown in FIG. 2 the message is an SMS message even though typically in this text by a message is meant an electronic data message suitable for being delivered in mobile networks from one subscriber to another. Some examples of a message are an SMS message, MMS message, electronic mail message, voice message, video message, picture message and text message. Besides including subject matter, a message can also comprise information regarding the sender and/or recipient of the message, e.g. sender's and/or recipient's MSISDN. Messages can be sent and received for example with mobile terminals 12, 22 such as a mobile phone or a PDA.

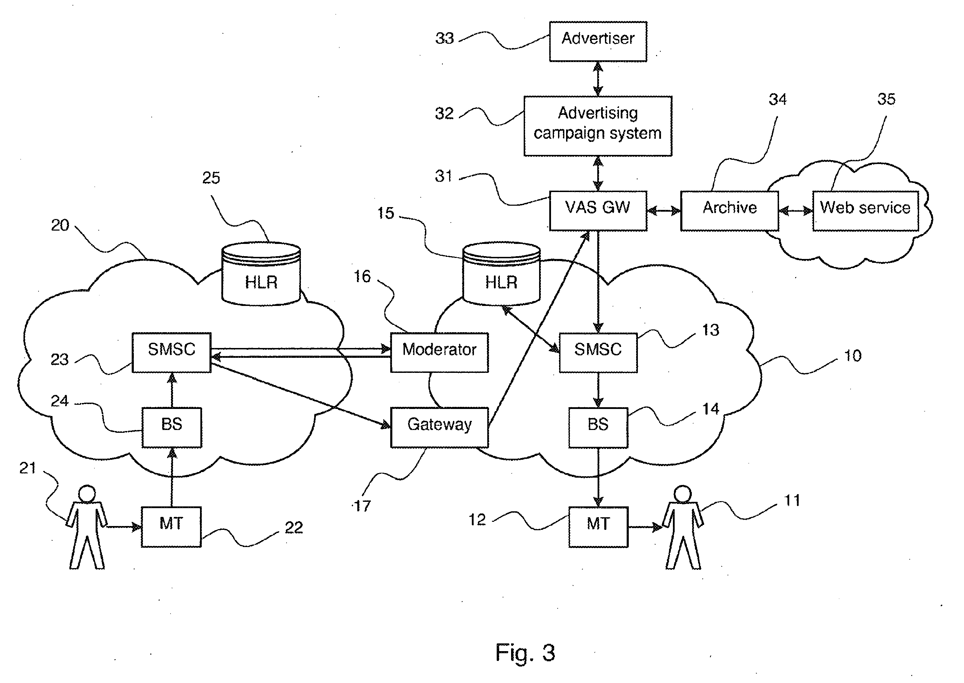

FIG. 3 shows a block diagram of a communication system according to an embodiment of the invention. The routing instructions received from the moderator server 16 instruct the SMSC 23 to deliver the message to the gateway server 17. From the gateway server 17 the message can be delivered to a value-added service gateway (VAS GW) server 31 as shown in FIG. 3, or alternatively to the SMSC 13. Selecting the forwarding route can e.g. be based on subscriber information of a value-added service. The selecting can comprise reading recipient information included in the message, comparing said recipient information with subscriber information of the value-added service, and determining the forwarding route for the message based on whether the recipient of the message is a subscriber of the value-added service or not. The recipient information included in the message can be e.g. the recipient's MSISDN.

By a value-added service is meant a non-core telecommunication service. On a conceptual level, a value-added service adds value to the standard service offering, spurring subscribers of the mobile network to use their mobile phones more and allowing the network operator to drive up the average revenue per user. A value-added service can be provided either in-house by the network operator or by a third party value-added service provider. Subscriber information of a value-added service can comprise e.g. subscriber's MSISDN and information of subscribed service features. Subscriber information of a value-added service can be maintained e.g. on the gateway server 17.

At the VAS GW server 31 content of the message can be modified, for example by adding an advertisement to the message by utilizing subscriber information of the value-added service. Subscriber information can be maintained on the VAS GW server 31, and advertisements and campaign parameters can be maintained on an advertising campaign system 32.

The message can be modified by reading recipient information included in the message, selecting subscriber information of the value-added service corresponding to the recipient information, selecting an advertisement from the advertising campaign system 32 based on said subscriber information and campaign parameters, and adding said advertisement to the message. The recipient information included in the message can be e.g. the recipient's MSISDN.

An advertiser 33 or a third party uses the advertising campaign system 32 to design an advertising campaign. The advertiser 33 or third party typically defines campaign parameters, which set the rules of the advertising campaign, and inputs advertisements to the advertising campaign system 32. Campaign parameters define e.g. certain subscriber profiles i.e. one or more subscribers with similar properties. By an advertisement is meant electronic data that can be attached to the message and represented visually and/or acoustically to a consumer. An advertisement can comprise e.g. text, images, sounds, videos, html (hypertext markup language), xml (extensible markup language), tags, links.

An advertisement can be selected according to a set of rules as defined by the advertiser 33 or a third party operator. One of the rules by which an advertisement is selected for the message is based on the profile of the receiving mobile terminal 12. Alternatively the selection can be based on the profile of the sending mobile terminal 22. Since the profile of the sending mobile terminal 22 is typically known by the network operator of the transmitting mobile network 20, selection of the advertisement based on this information requires business agreements between the network operators. One type of an arrangement is a revenue share of the generated advertising revenues to cover a part or all of the termination cost to be paid by the network operator of the transmitting mobile network 20 in return of the profile information.

From the VAS GW server 31 a copy of the message with or without the advertisement can be forwarded to and then stored in an archive database 34. Forwarding a copy of the message to the archive database 34 may be conditional on activation of an archive service of the value-added service. In case the recipient of the message has activated the archive service, a copy of the message is conveyed to the archive database 34.

The archive database 34 enables long-term storing of the message. The archive database 34 can be implemented in such a database structure that the original message and added advertisement content are presented together or the advertisement related to the message can be changed periodically or randomly, or whenever certain parameters defining the modifying process of the message are updated. The advertisement can be changed e.g. when the profile of the recipient (subscriber information) changes or when an advertising campaign (advertisements, campaign parameters) defined in the advertising campaign system 32 changes. The VAS GW server 31 may be configured to change an advertisement.

An archive service is an optional feature of the value-added service. By an archive database 34 is meant an electronic database of archived messages. Archived messages can be accessed by the subscriber of the value-added service and if allowed by a third party for further processing purposes. Messages can be stored with or without an advertisement.

The archive database 34 can comprise an application program interface (API). By an application program interface is meant an interface (calling conventions) by which an application program accesses an operating system and other services. An access for a web service to the archive database 34 can be given through the API. The API can include a method for conveying the message to a web service such as a blog, personal or corporate web page, mobile Internet service, or wireless application protocol (WAP) service. The API may also include a method for altering the advertisement of the message in said implemented web service. By using the API the message can be downloaded to a web service server 35, which can be configured to present the message with or without the advertisement. The subscriber of the value-added service or the network operator can determine which messages are conveyed to the web service server 35 and published e.g. as blog entries. An advertisement related to the archived message or blog message can be the same, similar or different than once sent to the subscriber.

The archive database 34 can be configured to track the number of clicks or viewings of the advertisement included in the message and to generate statistics information. By generating statistics information based on the number of clicks or viewings of the advertisement, consumer benefits can be generated for the subscriber of the value-added service.

The advertisement included in the message in the archive database 34 or web service server 35 can include a "click-thru" type of functionality. "Click-thru" refers here to a concept where a ticket is issued to the advertising campaign system 32 for billing purposes if the recipient 11 or other user clicks on the message entry and/or related advertisement in the archive database 34 or web service server 35. The "click-thru" feature can be used to give subscriber benefits such as free or subsidized voice minutes, messaging services and/or data services in the mobile network by adjusting the balance of the subscriber's account (pre-paid or post-paid).

The arrangement can also be used e.g. to provide an easy mobile blog service by allocating a special number to which a message is sent and then published as a blog entry for the subscriber. The arrangement can include a possibility for the subscriber and the network operator to enter parameters and a set of rules according to which messages received and sent are published as blog entries and who can have access to those (privacy level).

To deliver the message to the recipient 11, the message is transmitted from the VAS GW server 31 to the SMSC 13 as shown in FIG. 3. The SMSC 13 determines location of the recipient 11 by communicating with the HLR 15. Then according to the location the message is delivered to the mobile terminal 12 of the recipient 11 via the base station 14. The advertisement related to the message can be different than the advertisement related to the message in the archive database 34 or web service server 35.

The HLR 15 represents an example of a subscriber location database which is an electronic database of permanent subscriber information for the mobile network, including address, account status, and preferences. The subscriber location database maintains e.g. details of SIM (Subscriber Identity Module) cards issued by the network operator. The subscriber location database also comprises location information and service profiles of the subscribers of the mobile network. The subscriber location database, which is maintained by the network operator, also manages the mobility of subscribers by means of updating their position.

The modifying and archiving arrangement of a message shown in FIG. 3 can also be used to provide services for a message sent from the mobile network 10 to the mobile network 20. Furthermore, the described arrangement is also suitable for processing a message sent and received within one mobile network 10.

Being computer-related, it can be appreciated that the components disclosed herein may be implemented in hardware, software, or a combination of hardware and software. Software components may be in the form of computer-readable program code stored in a computer-readable storage medium such as memory, mass storage device, or removable storage device. For example, a computer-readable medium may comprise computer-readable code for performing the function of a particular component. Likewise, computer memory may be configured to include one or more components, which may then be executed by a processor. Components may be implemented separately in multiple modules or together in a single module.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A method for processing a message, comprising:
receiving, at a moderator server (16) of a first mobile network (10), a request to send routing instructions of the message to a store-and-forward center (23) of a second mobile network (20);
generating the routing instructions in the moderator server (16), which routing instructions instruct the store-and-forward center (23) of the second mobile network (20) to route the message to a gateway server (17) of the first mobile network (10), said gateway server (17) being different from said moderator server (16);
transmitting the routing instructions from the moderator server (16) to the store-and-forward center (23);
receiving, at the gateway server (17), the message from the store-and-forward center (23) of the second mobile network (20), which message has been sent according to the routing instructions;
selectively forwarding the message from the gateway server (17) to a value added service gateway server (31) of the first mobile network (10) or to a store-and-forward centre (13) of the first network based on a subscriber identity of a recipient of the message;
in the case of a selectively forwarded message, receiving, at the value added service gateway server (31) of the first mobile network (10), the selectively forwarded message from the gateway server (17), wherein the value added service gateway server (31) effects processing of the message to provide services to the recipient of the message in relation to the message; and
in the case of a non-selectively forwarded message, receiving, at the store-and-forward centre (13) of the first network, said non-selectively forwarded message.

2. A method according to claim 1, in which the message is selected from a group comprising a short message service message, multimedia messaging service message, electronic mail message, voice message, video message, picture message and text message.

3. A method according to claim 1, further comprising:
modifying content of the message at the value-added service gateway server (31).

4. A method according to claim 3, in which said modifying content of the message is performed by:
reading recipient information included in the message;
selecting subscriber information of a value-added service corresponding to said recipient information;
selecting an advertisement from an advertising campaign system (32) which selecting is based on campaign parameters and said subscriber information; and
adding said advertisement to the message.

5. A method according to any one of the preceding claims, further comprising:
forwarding a copy of the message to an archive database (34); and
storing the copy of the message in said archive database (34).

6. A method according to claim 5, in which said forwarding a copy of the message to an archive database (34), and storing the message in said archive database (34) is performed in case the recipient of the message has activated an archive service of the value-added service.

7. A method according to claim 5 or claim 6, further comprising:
updating advertisements maintained on the advertising campaign system (32); and
modifying the content of the message which modifying is based on updated advertisements.

8. A method according to claim 5 or claim 6, further comprising:
updating campaign parameters maintained on the advertising campaign system (32); and
modifying the content of the message which modifying is based on updated campaign parameters.

9. A method according to claim 5 or claim 6, further comprising:
updating subscriber information of the value-added service maintained on the value-added service gateway server (31); and
modifying the content of the message which modifying is based on updated subscriber information.

10. A method according to any one of claim 5 to claim 9, further comprising:
giving, for a web service, an access to the archive database (34) through an application program interface; and
conveying the message from the archive database (34) to the web service server (35) through the application program interface.

11. A method according to claim 10, further comprising:
presenting the message by using the web service;
tracking a number of clicks or viewings of the advertisement included in the message; and
generating statistics information based on the number of clicks or viewings of the advertisement.

12. A method according to any one of the preceding claims, further comprising:
forwarding the processed, selectively forwarded message to a store-and-forward center (13) of the first mobile network (10);
determining location of the recipient by communicating with a subscriber location database (15) of the first mobile network (10), which subscriber location database (15) maintains location information of subscribers of the first mobile network (10);
selecting a base station (14) of the first mobile network (10) based on the location of the recipient; and
delivering the message through said base station (14) to the recipient.

13. A method according to claim 12, in which the store-and-forward center (13) of the first mobile network (10) is selected from a group comprising a short message service center and multimedia messaging service center.

14. A method according to claim 13, in which the subscriber location database (15) is a home location register (15).

15. A system for processing a message, comprising:
a moderator server (16) of a first mobile network (10) configured to receive a request to send routing instructions of the message to a store-and-forward center (23) of a second mobile network (20), to generate the routing instructions which instruct the store-and-forward center (23) to route the message to a gateway server (17) of the first mobile network (10), said gateway server being different from said moderator server, and to transmit the routing instructions to the store-and-forward center (23);
a gateway server (17) of the first mobile network (10) configured to receive the message from the store-and-forward center (23) of the second mobile network (20), which message has been sent according to the routing instructions, and to selectively forward the message to a value added service gateway server (31) of the first mobile network (10) or to a store-and-forward centre (13) of the first network based on a subscriber identity of a recipient of the message; and
the value added service gateway server (31) of the first mobile network (10) being configured to receive a said selectively forwarded message from the gateway server (17) of the first mobile network (10), wherein the value added service gateway server (31) effects processing of the message to provide services to the recipient of the message in relation to the message.

16. A system according to claim 15, wherein the message is selected from a group comprising a short message service message, multimedia messaging service message, electronic mail message, voice message, video message, picture message and text message.

17. A system according to claim 16, wherein the value-added service gateway server (31) is configured to modify content of the message.

18. A system according to claim 17, further comprising an advertising campaign system (32) configured to maintain advertisements and campaign parameters, and wherein the value-added service gateway server (31) is configured to read recipient information included in a said message forwarded thereto, to select subscriber information of a value-added service corresponding to said recipient information which subscriber information is maintained on the value-added service gateway server (31), to select an advertisement from the advertising campaign system (32) which selecting is based on said subscriber information and campaign parameters, and to add said advertisement to the message.

19. A system according to any one of claim 16 to claim 18, further comprising an archive database (34) configured to store a said message forwarded to the value-added service gateway server (31), and wherein the value-added service gateway server (31) is configured to forward a copy of the message to the archive database (34).

20. A system according to any one of claim 17 to claim 19, wherein the value-added service gateway server (31) is configured to modify the content of the message which modifying is based on updated advertisements.

21. A system according to any one of claim 17 to claim 19, wherein the value-added service gateway server (31) is configured to modify the content of the message, which modifying is based on updated campaign parameters.

22. A system according to any one of claim 17 to claim 19, wherein the value-added service gateway server (31) is configured to modify the content of the message, which modifying is based on updated subscriber information.

23. A system according to any one of claim 19 to claim 22, wherein the archive database (34) comprises an application program interface configured to give an access for a web service to said archive database (34), and to convey the message to said web service.

24. A system according to claim 23, wherein the archive database (34) is configured to track a number of clicks or viewings of the advertisement included in the message and presented in the web service, and to generate statistics information based on the number of clicks or viewings of the advertisement.

25. A system according to any one of claim 15 to claim 24, wherein the store-and-forward center (13) of the first mobile network (10) is further configured to receive a said message forwarded to the value-added service gateway server (31) from the value-added service gateway server (31).

26. A system according to any one of claim 15 to claim 25, wherein the store-and-forward center (13) of the first mobile network (10) is selected from a group comprising a short message service center and multimedia messaging service center.

27. A system according to any one of claim 15 to claim 26, further comprising a subscriber location database (15) of the first mobile network (10) configured to maintain location information of subscribers of the first mobile network (10).

28. A system according to claim 27, wherein the subscriber location database (15) is a home location register (15).

29. A system according to claim 27 or claim 28, wherein the store-and-forward center (13) of the first mobile network (10) is configured to determine location of the recipient by communicating with the subscriber location database (15), and to deliver the message to the recipient.

30. A computer program comprising program code means for performing the steps of any one of claim 1 to claim 14 when said program is run on a computer.

31. A computer program product comprising program code means stored on a computer-readable medium for performing the method of any one of claim 1 to claim 14 when said program is run on a computer.

## Patentansprüche

1. Verfahren zum Verarbeiten einer Nachricht, umfassend:
Empfangen, an einem Moderatorserver (16) eines ersten Mobilfunknetzes (10), eine Anfrage zum Senden von Weiterleitungsanweisungen der Nachricht an eine Speicher-und-Weiterleitungs-Zentrale (23) eines zweiten Mobilfunknetzes (20);
Erzeugen der Weiterleitungsanweisungen im Moderatorserver (16), wobei die Weiterleitungsanweisungen die Speicher-und-Weiterleitungs-Zentrale (23) des zweiten Mobilfunknetzes (20) anweisen, die Nachricht an einen Gateway-Server (17) des ersten Mobilfunknetzes (10) weiterzuleiten, wobei der Gateway-Server (17) vom Moderatorserver (16) verschieden ist;
Übertragen der Weiterleitungsanweisungen von dem Moderatorserver (16) an die Speicher-und-Weiterleitungs-Zentrale (23);
Empfangen, am Gateway-Server (17), der Nachricht von der Speicher-und-Weiterleitungs-Zentrale (23) des zweiten Mobilfunknetzes (20), wobei die Nachricht gemäß den Weiterleitungsanweisungen versendet worden ist;
wahlweises Weiterleiten der Nachricht von dem Gateway-Server (17) zu einem Mehrwertdienst-Gateway-Server (31) des ersten Mobilfunknetzes (10) oder an eine Speicher-und-Weiterleitungs-Zentrale (13) des ersten Netzwerkes basierend auf einer Teilnehmeridentität eines Empfängers der Nachricht;
im Falle einer wahlweise weitergeleiteten Nachricht, Empfangen, an dem Mehrwertdienst-Gateway-Server (31) des ersten Mobilfunknetzes (10), der wahlweise weitergeleiteten Nachricht von dem Gateway-Server (17), wobei der Mehrwertdienst-Gateway-Server (31) ein Verarbeiten der Nachricht bewirkt, um dem Empfänger der Nachricht Dienste im Zusammenhang mit der Nachricht bereitzustellen; und
im Falle einer nicht-wahlweise weitergeleiteten Nachricht, Empfangen der nicht-wahlweise weitergeleiteten Nachricht an der Speicher-und-Weiterleitungs-Zentrale (13) des ersten Netzes.

2. Verfahren nach Anspruch 1, bei dem die Nachricht von einer Gruppe ausgewählt wird, die
eine Kurznachrichtendienstnachricht, eine Multimedianachrichtendienstnachricht, eine E-Mail-Nachricht, eine Sprachnachricht, eine Videonachricht, eine Bildnachricht und eine Textnachricht umfasst.

3. Verfahren nach Anspruch 1, weiter umfassend:
Modifizieren eines Inhalts der Nachricht an dem Mehrwertdienst-Gateway-Server (31).

4. Verfahren nach Anspruch 3, bei dem das Modifizieren eines Inhalts der Nachricht durchgeführt wird durch:
Lesen von Empfängerinformation, die in der Nachricht beinhaltet ist;
Auswählen einer Teilnehmerinformation eines Mehrwertdienstes, der der Empfängerinformation entspricht;
Auswählen einer Werbung von einem Werbeaktionssystem (32), wobei das Auswählen auf Aktionsparameter und der Teilnehmerinformation basiert; und
Hinzufügen der Werbung zu der Nachricht.

5. Verfahren nach einem der vorhergehenden Ansprüche, weiter umfassend:
Weiterleiten einer Kopie der Nachricht an eine Archivdatenbank (34); und
Speichern der Kopie der Nachricht in der Archivdatenbank (34).

6. Verfahren nach Anspruch 5, bei dem das Weiterleiten einer Kopie der Nachricht an eine Archivdatenbank (34) und das Speichern der Nachricht in der Archivdatenbank (34) durchgeführt wird, falls der Empfänger der Nachricht einen Archivdienst des Mehrwertdienstes aktiviert hat.

7. Verfahren nach Anspruch 5 oder Anspruch 6, weiter umfassend:
Aktualisieren von Werbungen, die in dem Werbeaktionssystem (32) verwaltet werden;
und
Modifizieren des Inhalts der Nachricht, wobei das Modifizieren auf aktualisierten Werbungen basiert.

8. Verfahren nach Anspruch 5 oder Anspruch 6, weiter umfassend:
Aktualisieren von Aktionsparametern, die in dem Werbeaktionssystem (32) verwaltet werden; und
Modifizieren des Inhalts der Nachricht, wobei das Modifizieren auf aktualisierten Aktionsparametern basiert.

9. Verfahren nach Anspruch 5 oder Anspruch 6, weiter umfassend:
Aktualisieren einer Teilnehmerinformation des Mehrwertdienstes, die im Mehrwertdienst-Gateway-Server (31) verwaltet wird,
Modifizieren des Inhalts der Nachricht, wobei das Modifizieren auf einer aktualisierten Teilnehmerinformation basiert.

10. Verfahren nach einem der Ansprüche 5 bis Anspruch 9, weiter umfassend:
Vergeben eines Zugangs zu der Archivdatenbank (34) an einen Netzdienst mittels einer Anwendungsprogrammschnittstelle; und
Übermitteln der Nachricht von der Archivdatenbank (34) zu dem Netzdienstserver (35) mittels der Anwendungsprogrammschnittstelle.

11. Verfahren nach Anspruch 10, weiter umfassend:
Präsentieren der Nachricht durch Nutzen des Netzdienstes;
Verfolgen der Anzahl von Klicks oder Betrachtungen der in der Nachricht enthaltenen Werbung; und
Erzeugen einer Statistikinformation basierend auf der Anzahl von Klicks oder Betrachtungen der Werbung.

12. Verfahren nach einem der vorhergehenden Ansprüche, weiter umfassend:
Weiterleiten der verarbeiteten, wahlweisen weitergeleiteten Nachricht an eine Speicher-und-Weiterleitungs-Zentrale (13) des ersten Mobilfunknetzes (10);
Bestimmen des Orts des Empfängers durch Kommunizieren mit einer Teilnehmerortsdatenbank (15) des ersten Mobilfunknetzes (10), wobei die Teilnehmerortsdatenbank (15) eine Ortsinformation von Teilnehmern des ersten Mobilfunknetzes (10) verwaltet;
Auswählen einer Basisstation (14) des ersten Mobilfunknetzes (10) basierend auf dem Ort des Empfängers; und
Liefern der Nachricht an den Empfänger über die Basisstation (14).

13. Verfahren nach Anspruch 12, bei dem die Speicher-und-Weiterleitungs-Zentrale (13) des ersten Mobilfunknetzes (10) von einer Gruppe umfassend eine Kurznachrichtendienstzentrale und eine Multimedianachrichtendienstzentrale ausgewählt wird.

14. Verfahren nach Anspruch 13, bei dem die Teilnehmerortsdatenbank (15) ein Heimatregister (15) ist.

15. System zum Verarbeiten einer Nachricht, umfassend:
einen Moderatorserver (16) eines ersten Mobilfunknetzes (10), der ausgebildet ist zum Empfangen einer Anfrage zum Senden von Weiterleitungsanweisungen der Nachricht an eine Speicher-und-Weiterleitungs-Zentrale (23) eines zweiten Mobilfunknetzes (20), zum Erzeugen der Weiterleitungsanweisungen, die die Speicher-und-Weiterleitungs-Zentrale (23) anweisen, die Nachricht an einen Gateway-Server (17) des ersten Mobilfunknetzes (10) weiterzuleiten, wobei der Gateway-Server vom Moderatorserver verschieden ist, und zum Übertragen der Weiterleitungsanweisungen an die Speicher-und-Weiterleitungs-Zentrale (23);
einen Gateway-Server (17) des ersten Mobilfunknetzes (10), der ausgebildet ist zum Empfangen der Nachricht von der Speicher-und-Weiterleitungs-Zentrale (23) des zweiten Mobilfunknetzes (20), wobei die Nachricht gemäß den Weiterleitungsanweisungen versendet worden ist, und zum wahlweisen Weiterleiten der Nachricht zu einem Mehrwertdienst-Gateway-Server (31) des ersten Mobilfunknetzes (10) oder an eine Speicher-und-Weiterleitungs-Zentrale (13) des ersten Netzwerkes basierend auf einer Teilnehmeridentität des Empfängers der Nachricht, und
wobei der Mehrwertdienst-Gateway-Server (31) des ersten Mobilfunknetzes (10) ausgebildet ist zum Empfangen der wahlweise weitergeleiteten Nachricht vom Gateway-Server (17) des ersten Mobilfunknetzes (10), wobei der Mehrwertdienst-Gateway-Server (31) ein Verarbeiten der Nachricht bewirkt, um dem Empfänger der Nachricht Dienste im Zusammenhang mit der Nachricht bereitzustellen.

16. System nach Anspruch 15, wobei die Nachricht von einer Gruppe ausgewählt wird, die eine Kurznachrichtendienstnachricht, eine Multimedianachrichtendienstnachricht, eine E-Mail-Nachricht, eine Sprachnachricht, eine Videonachricht, eine Bildnachricht und eine Textnachricht umfasst.

17. System nach Anspruch 16, wobei der Mehrwertdienst-Gateway-Server (31) ausgebildet ist, einen Inhalt der Nachricht zu modifizieren.

18. System nach Anspruch 17, weiter umfassend:
ein Werbeaktionssystem (32), das ausgebildet ist zum Verwalten von Werbungen und Aktionsparametern, und wobei der Mehrwertdienst-Gateway-Server (31) ausgebildet ist, zum Lesen einer Empfängerinformation, die in der an diesen weitergeleiteten Nachricht enthalten ist, zum Auswählen einer Teilnehmerinformation eines Mehrwertdienstes, der der Empfängerinformation entspricht, wobei die Teilnehmerinformation auf dem Mehrwertdienst-Gateway-Server (31) verwaltet wird, zum Auswählen einer Werbung des Werbeaktionssystems (32), wobei das Auswählen auf der Teilnehmerinformation und Aktionsparametern basiert, und zum Hinzufügen der Werbung zu der Nachricht.

19. System nach einem der Ansprüche 16 bis 18, weiter umfassend eine Archivdatenbank (34), die ausgebildet ist zum Speichern einer an den Mehrwertdienst-Gateway-Server (31) weitergeleiteten Nachricht, und wobei der Mehrwertdienst-Gateway-Server (31) ausgebildet ist zum Weiterleiten einer Kopie der Nachricht an die Archivdatenbank (34).

20. System nach einem der Ansprüche 17 bis 19, wobei der Mehrwertdienst-Gateway-Server (31) ausgebildet ist, den Inhalt der Nachricht zu modifizieren, wobei das Modifizieren auf aktualisierten Werbungen basiert.

21. System nach einem der Ansprüche 17 bis 19, wobei der Mehrwertdienst-Gateway-Server (31) ausgebildet ist, den Inhalt der Nachricht zu modifizieren, wobei das Modifizieren auf aktualisierten Aktionsparametern basiert.

22. System nach einem der Ansprüche 17 bis 19, wobei der Mehrwertdienst-Gateway-Server (31) ausgebildet ist, den Inhalt der Nachricht zu modifizieren, wobei das Modifizieren auf einer aktualisierten Teilnehmerinformation basiert.

23. System nach einem der Ansprüche 19 bis 22, wobei die Archivdatenbank (34) eine Anwendungsprogrammschnittstelle umfasst, die ausgebildet ist zum Vergeben eines Zugangs zu der Archivdatenbank (34) für einen Netzdienst und zum Übermitteln der Nachricht an den Netzdienst.

24. System nach Anspruch 23, wobei die Archivdatenbank (34) ausgebildet ist, eine Anzahl von Klicks oder Betrachtungen der in der Nachricht enthaltenen und der in dem Webdienst präsentierten Werbung zu verfolgen und eine Statistikinformation basierend auf der Anzahl von Klicks oder Betrachtungen der Werbung zu erzeugen.

25. System nach einem der Ansprüche 15 bis 24, wobei die Speicher-und-Weiterleitungs-Zentrale (13) des ersten Mobilfunknetzes (10) weiter ausgebildet ist, die an den Mehrwertdienst-Gateway-Server (31) weitergeleitete Nachricht von dem Mehrwertdienst-Gateway-Server (31) zu empfangen.

26. System nach einem der Ansprüche 15 bis 25, wobei die Speicher-und-Weiterleitungs-Zentrale (13) des ersten Mobilfunknetzes (10) von einer Gruppe umfassend eine Kurznachrichtenservicezentrale und eine Multimedianachrichtenservicezentrale ausgewählt ist.

27. System nach einem der Ansprüche 15 bis 26, weiter umfassend eine Teilnehmerortsdatenbank (15) des ersten Mobilfunknetzes (10), die ausgebildet ist zum Verwalten einer Ortsinformation von Teilnehmern des ersten Mobilfunknetzes (10).

28. System nach Anspruch 27, wobei die Teilnehmerortsdatenbank (15) ein Heimatregister (15) ist.

29. System nach Anspruch 27 oder Anspruch 28, wobei die Speicher-und-Weiterleitungs-Zentrale (13) des ersten Mobilfunknetzes (10) ausgebildet ist, den Ort des Empfängers durch Kommunizieren mit der Teilnehmerortsdatenbank (15) zu bestimmen und die Nachricht an den Empfänger zu liefern.

30. Computerprogramm mit Programmcodemitteln zum Ausführen der Schritte eines der Ansprüche 1 bis 14, wenn das Computerprogramm auf einem Computer ausgeführt wird.

31. Computerprogrammprodukt umfassend auf einem computerlesbaren Datenträger gespeicherte Programmcodemittel zum Ausführen des Verfahrens gemäß einem der Ansprüche 1 bis 14, wenn das Programm auf einem Computer ausgeführt wird.

## Revendications

1. Procédé de traitement d'un message comprenant :
la réception, sur un serveur modérateur (16) d'un premier réseau mobile (10), d'une demande pour envoyer des instructions de routage du message à un centre de stockage et transfert (23) d'un deuxième réseau mobile (20) ;
la génération des instructions de routage dans le serveur modérateur (16), lesquelles instructions de routage donnent instruction au centre de stockage et transfert (23) du deuxième réseau mobile (20) d'acheminer le message à un serveur passerelle (17) du premier réseau mobile (10), ledit serveur passerelle (17) étant différent dudit serveur modérateur (16) ;
la transmission des instructions de routage du serveur modérateur (16) au centre de stockage et transfert (23) ;
la réception, sur le serveur passerelle (17), du message provenant du centre de stockage et transfert (23) du deuxième réseau mobile (20), lequel message a été envoyé suivant les instructions de routage ;
le transfert sélectif du message du serveur passerelle (17) à un serveur passerelle de service à valeur ajoutée (31) du premier réseau mobile (10) ou à un centre de stockage et transfert (13) du premier réseau sur la base d'une identité d'abonné d'un destinataire du message ;
dans le cas d'un message transféré sélectivement, la réception, sur le serveur passerelle de service à valeur ajoutée (31) du premier réseau mobile (10), du message transféré sélectivement à partir du serveur passerelle (17), dans lequel le serveur passerelle de service à valeur ajoutée (31) effectue un traitement du message pour fournir des services au destinataire du message en relation avec le message ; et
dans le cas d'un message transféré non sélectivement, la réception, au centre de stockage et transfert (13) du premier réseau, dudit message transféré non sélectivement.

2. Procédé selon la revendication 1, dans lequel le message est sélectionné parmi un groupe comprenant un message de service de messages courts, un message de service de messagerie multimédia, un message de courrier électronique, un message vocal, un message vidéo, un message d'image et un message de texte.

3. Procédé selon la revendication 1, comprenant en outre :
la modification du contenu du message au niveau du serveur passerelle de service à valeur ajoutée (31).

4. Procédé selon la revendication 3, dans lequel ladite modification du contenu du message est effectuée par :
la lecture d'informations de destinataire contenues dans le message ;
la sélection d'informations d'abonné d'un service à valeur ajoutée correspondant auxdites informations de destinataire ;
la sélection d'une publicité provenant d'un système de campagne publicitaire (32), laquelle sélection est basée sur des paramètres de campagne et lesdites informations d'abonné ; et
l'ajout de ladite publicité au message.

5. Procédé selon l'une quelconque des revendications précédentes, comprenant en outre :
le transfert d'une copie du message à une base de données d'archives (34) ; et
le stockage de la copie du message dans ladite base de données d'archives (34).

6. Procédé selon la revendication 5, dans lequel ledit transfert d'une copie du message à une base de données d'archives (34) et le stockage du message dans ladite base de données d'archives (34) sont effectués dans le cas où le destinataire du message aurait activé un service d'archives du service à valeur ajoutée.

7. Procédé selon la revendication 5 ou la revendication 6, comprenant en outre :
l'actualisation des publicités maintenues sur le système de campagne publicitaire (32) ; et
la modification du contenu du message, laquelle modification est basée sur des publicités actualisées.

8. Procédé selon la revendication 5 ou la revendication 6, comprenant en outre :
l'actualisation des paramètres de campagne maintenus sur le système de campagne publicitaire (32) ; et
la modification du contenu du message, laquelle modification est basée sur des paramètres de campagne actualisés.

9. Procédé selon la revendication 5 ou la revendication 6, comprenant en outre :
l'actualisation des informations d'abonné du service à valeur ajoutée maintenues sur le serveur passerelle de service à valeur ajoutée (31) ; et
la modification du contenu du message, laquelle modification est basée sur des informations d'abonné actualisées.

10. Procédé selon l'une quelconque des revendications 5 à 9, comprenant en outre :
la fourniture, pour un service Web, d'un accès à la base de données d'archives (34) à travers une interface de programme d'application ; et
l'acheminement du message de la base de données d'archives (34) au serveur de services Web (35) à travers l'interface de programme d'application.

11. Procédé selon la revendication 10, comprenant en outre :
la présentation du message en utilisant le service Web ;
le suivi d'un nombre de clics ou visionnages de la publicité incluse dans le message ; et
la génération d'informations statistiques basées sur le nombre de clics ou visionnages de la publicité.

12. Procédé selon l'une quelconque des revendications précédentes, comprenant en outre :
le transfert du message traité et transféré sélectivement au centre de stockage et transfert (13) du premier réseau mobile (10) ;
la détermination de la position du destinataire en communiquant avec une base de données de positions d'abonnés (15) du premier réseau mobile (10), laquelle base de données de positions d'abonnés (15) maintient des informations de position d'abonnés du premier réseau mobile (10) ;
la sélection d'une station de base (14) du premier réseau mobile (10) sur la base de la position du destinataire ; et
la fourniture du message au destinataire par le biais de ladite station de base (14).

13. Procédé selon la revendication 12, dans lequel le centre de stockage et transfert (13) du premier réseau mobile (10) est sélectionné parmi un groupe comprenant un centre de service de messages courts et un centre de service de messagerie multimédia.

14. Procédé selon la revendication 13, dans lequel la base de données de positions d'abonnés (15) est un registre de position de rattachement (15).

15. Système de traitement d'un message comprenant :
un serveur modérateur (16) d'un premier réseau mobile (10) configuré pour recevoir une demande pour envoyer des instructions de routage du message à un centre de stockage et transfert (23) d'un deuxième réseau mobile (20), pour générer les instructions de routage qui donnent instruction au centre de stockage et transfert (23) d'acheminer le message à un serveur passerelle (17) du premier réseau mobile (10), ledit serveur passerelle étant différent dudit serveur modérateur, et pour transmettre les instructions de routage au centre de stockage et transfert (23) ;
un serveur passerelle (17) du premier réseau mobile (10) configuré pour recevoir le message provenant du centre de stockage et transfert (23) du deuxième réseau mobile (20), lequel message a été envoyé suivant les instructions de routage, et pour transférer sélectivement le message à un serveur passerelle de service à valeur ajoutée (31) du premier réseau mobile (10) ou à un centre de stockage et transfert (13) du premier réseau sur la base d'une identité d'abonné d'un destinataire du message ; et
le serveur passerelle de service à valeur ajoutée (31) du premier réseau mobile (10) étant configuré pour recevoir un dit message transféré sélectivement à partir du serveur passerelle (17) du premier réseau mobile (10), dans lequel le serveur passerelle de service à valeur ajoutée (31) effectue un traitement du message pour fournir des services au destinataire du message en relation avec le message.

16. Système selon la revendication 15, dans lequel le message est sélectionné parmi un groupe comprenant un message de service de messages courts, un message de service de messagerie multimédia, un message de courrier électronique, un message vocal, un message vidéo, un message d'image et un message de texte.

17. Système selon la revendication 16, dans lequel le serveur passerelle de service à valeur ajoutée (31) est configuré pour modifier le contenu du message.

18. Système selon la revendication 17, comprenant en outre un système de campagne publicitaire (32) configuré pour maintenir des publicités et des paramètres de campagne, et dans lequel le serveur passerelle de service à valeur ajoutée (31) est configuré pour lire des informations de destinataire contenues dans un dit message transféré à celui-ci, pour sélectionner des informations d'abonné d'un service à valeur ajoutée correspondant auxdites informations de destinataire, lesquelles informations d'abonné sont maintenues sur le serveur passerelle de service à valeur ajoutée (31), pour sélectionner une publicité provenant du système de campagne publicitaire (32), laquelle sélection est basée sur lesdites informations d'abonné et lesdits paramètres de campagne, et pour ajouter ladite publicité au message.

19. Système selon l'une quelconque des revendications 16 à 18, comprenant en outre une base de données d'archives (34) configurée pour stocker un dit message transféré au serveur passerelle de service à valeur ajoutée (31), et dans lequel le serveur passerelle de service à valeur ajoutée (31) est configuré pour transférer une copie du message à la base de données d'archives (34).

20. Système selon l'une quelconque des revendications 17 à 19, dans lequel le serveur passerelle de service à valeur ajoutée (31) est configuré pour modifier le contenu du message, laquelle modification est basée sur des publicités actualisées.

21. Système selon l'une quelconque des revendications 17 à 19, dans lequel le serveur passerelle de service à valeur ajoutée (31) est configuré pour modifier le contenu du message, laquelle modification étant basée sur des paramètres de campagne actualisés.

22. Système selon l'une quelconque des revendications 17 à 19, dans lequel le serveur passerelle de service à valeur ajoutée (31) est configuré pour modifier le contenu du message, laquelle modification étant basée sur des informations d'abonné actualisées.

23. Système selon l'une quelconque des revendications 19 à 22, dans lequel la base de données d'archives (34) comprend une interface de programme d'application configurée pour donner un accès pour un service Web à ladite base de données d'archives (34) et pour acheminer le message audit service Web.

24. Système selon la revendication 23, dans lequel la base de données d'archives (34) est configurée pour suivre un nombre de clics ou visionnages de la publicité incluse dans le message et présentée dans le service Web, et pour générer des informations statistiques basées sur le nombre de clics ou visionnages de la publicité.

25. Système selon l'une quelconque des revendications 15 à 24, dans lequel le centre de stockage et transfert (13) du premier réseau mobile (10) est configuré en outre pour recevoir un dit message transféré au serveur passerelle de service à valeur ajoutée (31) à partir du serveur passerelle de service à valeur ajoutée (31).

26. Système selon l'une quelconque des revendications 15 à 25, dans lequel le centre de stockage et transfert (13) du premier réseau mobile (10) est sélectionné parmi un groupe comprenant un centre de service de messages courts et un centre de service de messagerie multimédia.

27. Système selon l'une quelconque des revendications 15 à 26, comprenant en outre une base de données de positions d'abonnés (15) du premier réseau mobile (10) configurée pour maintenir des informations de position d'abonnés du premier réseau mobile (10).

28. Système selon la revendication 27, dans lequel la base de données de positions d'abonnés (15) est un enregistreur de position de rattachement (15).

29. Système selon la revendication 27 ou la revendication 28, dans lequel le centre de stockage et transfert (13) du premier réseau mobile (10) est configuré pour déterminer la position du destinataire en communiquant avec la base de données de positions d'abonnés (15), et pour délivrer le message au destinataire.

30. Programme d'ordinateur comprenant des moyens de code de programme pour exécuter les étapes de l'une quelconque des revendications 1 à 14 quand ledit programme est exécuté sur un ordinateur.

31. Produit de programme d'ordinateur comprenant des moyens de code de programme stockés sur un support lisible par ordinateur pour exécuter le procédé selon l'une quelconque des revendications 1 à 14 quand ledit programme est exécuté sur un ordinateur.
